# EUROPEAN PATENT SPECIFICATION

(11) **EP 2 822 985 B1**
(45) Date of publication and mention of the grant of the patent: **30.11.2016**
(21) Application number: 13707342.5
(22) Date of filing: 26.02.2013
(51) Int. Cl.: C08G 59/22, C08G 59/50, C08L 63/00

(54) **AMINE CURABLE EPOXY RESIN COMPOSITION**
AMINHÄRTBAREN EPOXIDHARZZUSAMMENSETZUNG
COMPOSITION DE RÉSINE ÉPOXYDE DURCISSABLE PAR DES AMINES

(30) Priority: 09.03.2012 WO PCT/CN2012/072130
(43) Date of publication of application: 14.01.2015
(73) Proprietor: Construction Research & Technology GmbH, 83308 Trostberg (DE)
(72) Inventor: JIANG, Derek, Jingui, Shanghai (CN); WANG, Peter, Congxiao, Shanghai (CN); HANDYSIDE, Timothy, Marc, Saffron Walden Essex CB114NP (GB); ZHAO, Iris, Chunbin, Shanghai (CN)
(74) Representative: BASF IP Association
(86) International application number: PCT/EP2013/053762
(87) International publication number: WO 2013/131776

(56) References cited:
- EP-A1- 0 088 623
- EP-A1- 1 375 554
- WO-A1-98/17724
- WO-A1-2005/123800
- GB-A- 2 286 592

## Description

### Technical field

The invention relates to an amine curable epoxy resin composition. The invention also relates to use of the amine curable epoxy resin composition as primer, topcoat and screeds for application on concrete.

### Background of art

Amine curable epoxy resin compositions are used broadly in the floorings and coatings. For the moment, amine curable epoxy resin compositions in the market have longer Return to Service time or shorter pot life at room temperature, which causes them not able to being used easily at room temperature. GB 2 286 592 A disclosed an amine curable epoxy resin composition, wherein the composition with hardener GASMAMINE 328 has compressive strength of 30.5 MPa after application for 24 hours.

WO98/17724 is directed to a non-blushing coating of high gloss, long pot life and fast cure time obtained by using an epoxy curing agent which comprises an epichlorohydrin-metaxylylenediamine reaction product selected from the group consisting of N,N'-bis(3-aminomethylbenzyl)-2-hydroxytrimethylenediamine, the higher oligomers of N,N'-bis(3-aminomethylbenzyl)-2-hydroxytrimethylenediamine and mixtures thereof and a melting point depressant such as a benzyl alcohol or water and an alcohol solvent and, optionally, a tertiary amine such as N,N'-bis(3-(dimethylamino)propyl)-urea.

EP 0 088 623 discloses a polyamine compound of M-xylenediamine and its use as a hardening agent for epoxy resins and as a modifier for polyamide resins.

EP 1 375 554 discloses an amino composition, which when used as a curing agent for epoxy resin provides a long pot life and an excellent appearance of a coating film to an epoxy resin composition without deteriorating the reactivity of the composition. The amino composition is obtained by addition reaction of diamine such as metaxylylenediamine and 1,3-bis (aminomethyl) cyclohexane and styrene, wherein the content of the diamine is less than 15% by weight based upon the total weight of the amino composition and the content of 1-addition product of having one phenethyl group is 50 to 100% by weight based upon the total weight of amino compound(s) obtained by the addition reaction.

WO 2005/123800 discloses a curing agent for epoxy resins, consisting of A) 1% - 99% by weight of an adduct obtainable by reacting a1) a polyethylene polyamine having up to six nitrogens in the molecule with a2) a monoglycidyl ether, the adduct of a1) and a2) preferably being isolated by removal of the excess polyethylene polyamine, and B) 99% - 1% by weight of an adduct obtainable by reacting b1) a diamine or polyamine with b2) styrene, and also curable compositions further comprising an epoxide compound, and the use of these curable compositions for producing mouldings and sheetlike structures, and also for applications in the adhesives and sealants sector and for epoxy-resin mortars.

However, there is still a need that amine curable epoxy resin compositions having higher compressive strength, shorter Return to Service time and longer pot life are provided.

### Invention summary

Accordingly, the invention provides an amine curable epoxy resin composition comprising:
(A) epoxy resin component comprising:
   8-31 wt% of diglycidyl ether of bisphenol A,
   3-14 wt% of diglycidyl ether of bisphenol F,
   1-5 wt% of monoglycidylether,
   0.6-5 wt% of alkylsulphonic phenyl ester,
   0.16-1 wt% of wetting and dispersing agent,
   0.16-1 wt% of defoamer, and
   5-40 wt% of barium sulfate;
(B) hardener component comprising:
   3-18 wt% of first amine based composition, and
   2-12 wt% of second amine based composition,
   wherein the first amine based composition comprises N,N'-bis(3-aminomethylbenzyl)-2 -hydroxytrimethylenediamine represented by the following formula (I) and m-xylylenediamine, and the second amine based composition comprises the reaction products of m-xylylenediamine and styrene represented by the following formula (II) and m-xylylenediamine, styrene represented by the following formula (II) and ni-xylylenediamine, 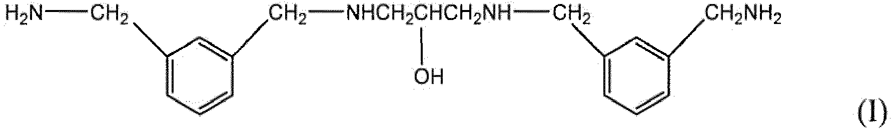 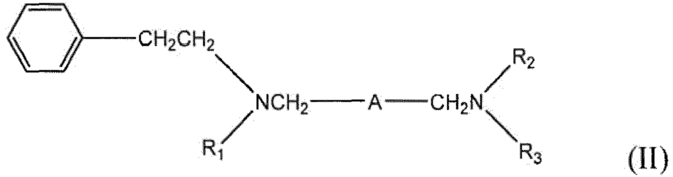 wherein A is phenylene, and each of R₁, R₂ and R₃ independently represents hydrogen or phenylethyl;
   wherein the sum of each component content is 100wt%, and each weight percentage is based on the total weight of the amine curable epoxy resin composition.

The invention also provides use of the amine curable epoxy resin composition as primer, topcoat and screeds for application on concrete.

The amine curable epoxy resin composition of the present invention has pot life of more than 25 minutes, Return to Service time of less than 12 hours and compressive strength of more than 80 MPa after application for 20 hours at room temperature.

### Embodiments

In one embodiment of the present invention, N,N'-bis(3-aminomethylbenzyl)-2 -hydroxytrimethylenediamine represented by the formula (I) is a reaction product of m-xylylenediamine and epichlorhydrin, which can be prepared by known process in the art.

In one embodiment of the present invention, the reaction products of m-xylylenediamine and styrene represented by the formula (II) are prepared according to the process described in CN03149428.5, for example see synthesis example 1.

In one embodiment of the present invention, the amine curable epoxy resin composition may further comprise silica sand. In preferred embodiment of the present invention, the particle size of silica sand is 200 meshes.

In preferred embodiment of the present invention, the content of N,N'-bis(3-aminomethylbenzyl)-2-hydroxytrimethylenediamine is 72-76wt% of the first amine based composition and the content of m-xylylenediamine is 24-28wt% of the first amine based composition in the first amine based composition. More preferably, the content of N,N'-bis(3-aminomethylbenzyl)-2-hydroxytrimethylenediamine is about 75wt% of the first amine based composition and the content of m-xylylenediamine is about 25wt% of the first amine based composition in the first amine based composition. Said first amine based composition is for example GASKAMINE 328 commercially available from Mitsubishi Gas Chemical Company, Inc.

In preferred embodiment of the present invention, the content of m-xylylenediamine is less than 1wt% of the second amine based composition in the second amine based composition. Said second amine based composition is for example GASKAMINE 240 commercially available from Mitsubishi Gas Chemical America, Inc.

In another embodiment of the present invention, said hardener component may further comprise CeTePox EW99 H which is a formulation based on alkyl polyamines, and CeTePox EW99 H is for example commercially available from CTP Chemicals and Technologies for Polymers GmbH.

In one embodiment of the present invention, the hardener component may further comprise benzyl alcohol.

In one embodiment of the present invention, the diglycidyl ether of bisphenol A is for example GELR 128 commercially available from Epoxy Base Electronic Material Corporation Limited. The diglycidyl ether of bisphenol F is for example Epikote 862 commercially available from Momentive Specialty Chemicals Inc..

In one embodiment of the present invention, monoglycidylether is for example Araldite DY-E commercially available from Huntsman.

In one embodiment of the present invention, the alkyl in the alkylsulphonic phenyl ester is C12 to C18. More preferably, the alkylsulphonic phenyl ester is dodecylsulphonic phenyl ester. The alkylsulphonic phenyl ester is for example MESAMOIL commercially available from LANXESS.

In preferred embodiment of the present invention, the wetting and dispersing agent is a solution of copolymer with acidic groups, and is for example DISPERBYK-110 commercially available from BYK Additives & Instrument.

In preferred embodiment of the present invention, the defoamer is a defoaming polymer mixture without organic silicon, and is for example BYK 1790 commercially available from BYK Additives & Instrument.

In preferred embodiment of the present invention, the particle size of barium sulfate is preferably 325 meshes.

In one embodiment of the present invention, the amine curable epoxy resin composition can be prepared as follows: (A) epoxy resin component is added into mixer at room temperature, such as high speed mixing machine, and mixed until homogeneity. Then, (B) hardener component is added into the above mixture and mixed until homogeneity. Optionally, silica sand can be added into the mixture of (A) epoxy resin component and (B) hardener component and mixed until homogeneity. Said high speed mixing machine is known to those skilled in the art.

In one embodiment of the present invention, (A) epoxy resin component and (B) hardener component can be packaged separately, and (A) epoxy resin component and (B) hardener component and optionally silica sand are mixed homogeneously before application.

The invention also relates to use of the amine curable epoxy resin composition as primer, topcoat and screeds for application on concrete. The amine curable epoxy resin composition can be applied by processes known to those skilled in the art, for example by using notched trowel, roller and spraying machine etc.

"Return to Service time" used herein represents a time period during which its hardness achieves Shore D 70 after the amine curable epoxy resin composition is applied on concrete with moisture content of 5wt% at room temperature.

"Pot life" used herein is measured according to method 1 of ISO 10364.

"Compressive strength" used herein is measured according to ASTM C 109.

All percentages are mentioned by weight unless otherwise indicated.

### Examples

The present invention is now further illustrated by reference to the following examples, however, the examples are used for the purpose of explanation and not intended to limit the scopes of the invention.

### Example 1

125g of diglycidyl ether of bisphenol A (GELR 128), 54g of diglycidyl ether of bisphenol F (Epikote 862), 15g of monoglycidylether (Araldite DY-E), 12g of alkylsulphonic phenyl ester (MESAMOIL), 3g of wetting and dispersing agent (DISPERBYK-110), 3g of defoamer (BYK 1790) and 138g of barium sulfate are added into high speed mixing machine and mixed until homogeneity, and mixture 1 is obtained. Then, the mixture of 40.2g of GASKAMINE 328 and 27.2g of GASKAMINE 240 is added into the mixture 1 and mixed until homogeneity, and mixture 2 is obtained.

Mixture 2 is applied by rolling as primer on concrete with moisture content of 5wt% at the temperature of 23±2°C and relative humidity of 50%, and wet film thickness (WFT) is 200 µm.

Mixture 2 and film prepared thereof are measured. The results are listed in table 1.

**Table 1**

| Property | Viscosity of mixture (cps) | Pot life (minute) | Return to Service time (hour) |
|---|---|---|---|
| Example 1 | 1517 | 43 | 7 |

835g of 200 meshes silica sand is added into the mixture 2 and mixed until homogeneity. Then, the resulted mixture is applied as screeds on concrete with moisture content of 5wt% at the temperature of 23±2°C and relative humidity of 50%, and compressive strength is measured as shown in table 2.

**Table 2**

| curing time (hour) | compressive strength (MPa) |
|---|---|
| 20 | 89.1 |
| 24 | 88.6 |
| 168 | 95.6 |

### Example 2

Mixture of 40.2g of GASKAMINE 328, 27.7g of GASKAMINE 240 and 10g of benzyl alcohol is added into the mixture 1 according to example 1 and mixed until homogeneity, and mixture 3 is obtained.

Mixture 3 is applied by rolling as primer on concrete with moisture content of 5wt% at the temperature of 23±2°C and relative humidity of 50%, and wet film thickness (WFT) is 0.5 millimeter.

Mixture 3 and film prepared thereof are measured. The results are listed in table 3.

**Table 3**

| Property | Viscosity of mixture (cps) | Pot life (minute) | Return to Service time (hour) |
|---|---|---|---|
| Example 2 | 1037 | 36 | 8 |

855g of 200 meshes silica sand is added into the mixture 3 and mixed until homogeneity. Then, the resulted mixture is applied as screeds on concrete with moisture content of 5wt% at the temperature of 23±2°C and relative humidity of 50%, and compressive strength is measured as shown in table 4.

**Table 4**

| curing time (hour) | compressive strength (MPa) |
|---|---|
| 20 | 98.5 |
| 24 | 98.5 |
| 168 | 115.8 |

### Example 3

Mixture of 40.2g of GASKAMINE 328, 13.4g of GASKAMINE 240, 13.4g of CeTePox EW99 H and 10g of benzyl alcohol is added into the mixture 1 according to example 1 and mixed until homogeneity, and mixture 4 is obtained.

Mixture 4 is applied by scraping as topcoat on concrete with moisture content of 5wt% at the temperature of 23±2°C and relative humidity of 50%, and wet film thickness (WFT) is 2.0 millimeters.

Mixture 4 and film prepared thereof are measured. The results are listed in table 5 and table 6.

**Table 5**

| Property | Viscosity of mixture (cps) | Pot life (minute) | Return to Service time (hour) |
|---|---|---|---|
| Example 3 | 1037 | 27 | 8 |

**Table 6**

| curing time (hour) | compressive strength (MPa) | |
|---|---|---|
| 20 | 140 | |
| 24 | 140 | |
| 168 | 140 | |

### Example 4

854g of 200 meshes silica sand is added into the mixture 4 according to example 3 and mixed until homogeneity. Then, the resulted mixture is applied as screeds on concrete with moisture content of 5wt% at the temperature of 23±2°C and relative humidity of 50%, and compressive strength is measured as shown in table 7.

**Table 7**

| curing time (hour) | compressive strength (MPa) |
|---|---|
| 20 | 91.1 |
| 24 | 93.5 |
| 168 | 107.5 |

### Example 5

Mixture of 40.2g of GASKAMINE 328, 27.7g of GASKAMINE 240 and 20g of benzyl alcohol is added into the mixture 1 according to example 1 and mixed until homogeneity, and mixture 5 is obtained.

Mixture 5 is applied by scraping as topcoat on concrete with moisture content of 5wt% at the temperature of 23±2°C and relative humidity of 50%, and wet film thickness (WFT) is 3.0 millimeters.

Mixture 5 and film prepared thereof are measured. The results are listed in table 8.

**Table 8**

| Property | Viscosity of mixture (cps) | Pot life (minute) | Return to Service time (hour) |
|---|---|---|---|
| Example 5 | 870 | 33 | 12 |

874g of 200 meshes silica sand is added into the mixture 5 and mixed until homogeneity. Then, the resulted mixture is applied as screeds on concrete with moisture content of 5wt% at the temperature of 23±2°C and relative humidity of 50%, and compressive strength is measured as shown in table 9.

**Table 9**

| curing time (hour) | compressive strength (MPa) |
|---|---|
| 20 | 80.3 |
| 24 | 81.9 |
| 168 | 98.2 |

It will be apparent to those skilled in the art that various modifications and variations can be made in the present invention without departing from the scope or spirit of the invention. Thus, it is intended that the present invention cover such modifications and variations as come within the scope of the appended claims and their equivalents.

| curing time (hour) | compressive strength (MPa) |
|---|---|
| 20 | 140 |
| 24 | 140 |
| 168 | 140 |

### Example 4

854g of 200 meshes silica sand is added into the mixture 4 according to example 3 and mixed until homogeneity. Then, the resulted mixture is applied as screeds on concrete with moisture content of 5wt% at the temperature of 23±2°C and relative humidity of 50%, and compressive strength is measured as shown in table 7.

**Table 7**

| curing time (hour) | compressive strength (MPa) |
|---|---|
| 20 | 91.1 |
| 24 | 93.5 |
| 168 | 107.5 |

### Example 5

Mixture of 40.2g of GASKAMINE 328, 27.7g of GASKAMINE 240 and 20g of benzyl alcohol is added into the mixture 1 according to example 1 and mixed until homogeneity, and mixture 5 is obtained.

Mixture 5 is applied by scraping as topcoat on concrete with moisture content of 5wt% at the temperature of 23±2°C and relative humidity of 50%, and wet film thickness (WFT) is 3.0 millimeters.

Mixture 5 and film prepared thereof are measured. The results are listed in table 8.

**Table 8**

| Property | Viscosity of mixture (cps) | Pot life (minute) | Return to Service time (hour) |
|---|---|---|---|
| Example 5 | 870 | 33 | 12 |

874g of 200 meshes silica sand is added into the mixture 5 and mixed until homogeneity. Then, the resulted mixture is applied as screeds on concrete with moisture content of 5wt% at the temperature of 23±2°C and relative humidity of 50%, and compressive strength is measured as shown in table 9.

**Table 9**

| curing time (hour) | compressive strength (MPa) |
|---|---|
| 20 | 80.3 |
| 24 | 81.9 |
| 168 | 98.2 |

It will be apparent to those skilled in the art that various modifications and variations can be made in the present invention without departing from the scope of the invention. Thus, it is intended that the present invention cover such modifications and variations as come within the scope of the appended claims and their equivalents.

## Claims

1. An amine curable epoxy resin composition comprising:
(A) epoxy resin component comprising:
8-31 wt% of diglycidyl ether of bisphenol A,
3-14 wt% of diglycidyl ether of bisphenol F,
1-5 wt% of monoglycidylether,
0.6-5 wt% of alkylsulphonic phenyl ester,
0.16-1 wt% of wetting and dispersing agent,
0.16-1 wt% of defoamer, and
5-40 wt% of barium sulfate;
(B) hardener component comprising:
3-18 wt% of first amine based composition, and
2-12 wt% of second amine based composition,
wherein the first amine based composition comprises N,N'-bis(3-aminomethylbenzyl)-2 -hydroxytrimethylenediamine represented by the following formula (I) and m-xylylenediamine, and the second amine based composition comprises the reaction products of m-xylylenediamine and styrene represented by the following formula (II) and m-xylylenediamine, 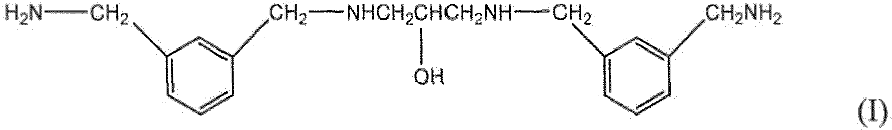 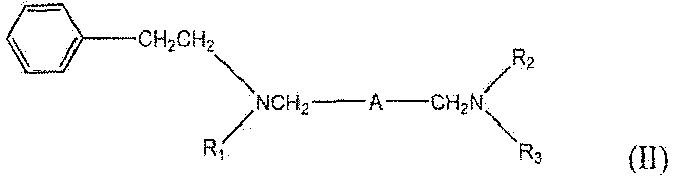 wherein A is phenylene, and each of R₁, R₂ and R₃ independently represents hydrogen or phenylethyl;
wherein the sum of each component content is 100wt%, and each weight percentage is based on the total weight of the amine curable epoxy resin composition.

2. The amine curable epoxy resin composition according to claim 1, wherein the content of N,N'-bis(3-aminomethylbenzyl)-2-hydroxytrimethylenediamine is 72-76wt% of the first amine based composition and the content of m-xylylenediamine is 24-28wt% of the first amine based composition in the first gamine based composition.

3. The amine curable epoxy resin composition according to claim 1 or 2, wherein the content of m-xylylenediamine is less than 1wt% of the second amine based composition in the second amine based composition.

4. The amine curable epoxy resin composition according to claim 1, further comprises silica sand.

5. The amine curable epoxy resin composition according to claim 1, wherein the hardener component further comprises benzyl alcohol.

6. The amine curable epoxy resin composition according to claim 1, wherein the alkyl in the alkylsulphonic phenyl ester is C12 to C18.

7. The amine curable epoxy resin composition according to claim 6, wherein the alkylsulphonic phenyl ester is dodecylsulphonic phenyl ester.

8. The amine curable epoxy resin composition according to claim 1, wherein the wetting and dispersing agent is a solution of copolymer with acidic groups.

9. The use of the amine curable epoxy resin composition according to claim 1 as primer, topcoat and screeds for application on concrete.

## Patentansprüche

1. Amin-härtbare Epoxyharzzusammensetzung, umfassend:
(A) Epoxyharzkomponente, umfassend:
8 - 31 Gew.-% Diglycidylether von Bisphenol A,
3 - 14 Gew.-% Diglycidylether von Bisphenol F,
1 - 5 Gew.-% von Monoglycidylether,
0,6 - 5 Gew.-% von Alkylsulphonsäurephenylester,
0,16 - 1 Gew.-% Benetzungs- und Dispergiermittel,
0,16 - 1 Gew.-% Entschäumer und
5 - 40 Gew.-% von Bariumsulfat;
(B) Härtungsmittelkomponente, umfassend:
3 - 18 Gew.-% einer ersten Amin-basierenden Zusammensetzung und
2 - 12 Gew.-% einer zweiten Amin-basierenden Zusammensetzung,
wobei die erste Amin-basierende Zusammensetzung N,N'-Bis(3-amino methylbenzyl)-2-hydroxytrimethylendiamin, repräsentiert durch die folgende Formel (I), und m-Xylylendiamin umfasst, und die zweite Amin-basierende Zusammensetzung die Reaktionsprodukte von m-Xylylendiamin und Styrol, repräsentiert durch die folgende Formel (II), und m-Xylylendiamin umfasst, 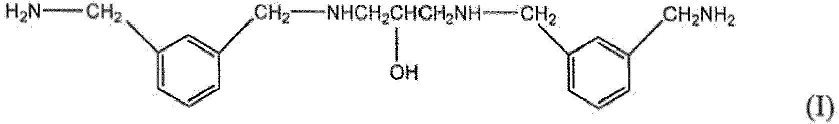 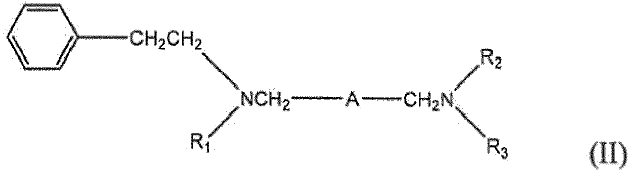 worin A Phenylen ist und jedes von R₁, R₂ und R₃ unabhängig für Wasserstoff oder Phenylethyl steht;
wobei die Summe jedes Komponentengehaltes 100 Gew.-% beträgt, und jede Gewichtsprozentangabe auf dem Gesamtgewicht der Amin-härtbaren Epoxyharzzusammensetzung basiert.

2. Amin-härtbare Epoxyharzzusammensetzung gemäß Anspruch 1, wobei der Gehalt an N,N'-Bis(3-aminomethylbenzyl)-2-hydroxytrimethylendiamin 72 - 76 Gew.-% der ersten Amin-basierten Zusammensetzung beträgt, und der Gehalt an m-Xylylendiamin 24 - 28 Gew.-% der ersten Amin-basierten Zusammensetzung in der ersten Amin-basierten Zusammensetzung beträgt.

3. Amin-härtbare Epoxyharzzusammensetzung gemäß Anspruch 1 oder 2, wobei der Gehalt an m-Xylylendiamin weniger als 1 Gew.-% der zweiten Amin-basierten Zusammensetzung in der zweiten Amin-basierten Zusammensetzung beträgt.

4. Amin-härtbare Epoxyharzzusammensetzung gemäß Anspruch 1, welche ferner Silicasand umfasst.

5. Amin-härtbare Epoxyharzzusammensetzung gemäß Anspruch 1, wobei die Härtungsmittelkomponente ferner Benzylalkohol umfasst.

6. Amin-härtbare Epoxyharzzusammensetzung gemäß Anspruch 1, wobei das Alkyl in dem Alkylsulphonsäurephenylester C12 bis C18 ist.

7. Amin-härtbare Epoxyharzzusammensetzung gemäß Anspruch 6, wobei der Alkylsulphonsäurephenylester Dodecylsulphonsäurephenylester ist.

8. Amin-härtbare Epoxyharzzusammensetzung gemäß Anspruch 1, wobei das Benetzungs- und Dispergiermittel eine Lösung von Copolymer mit sauren Gruppen ist.

9. Verwendung der Amin-härtbaren Epoxyharzzusammensetzung gemäß Anspruch 1 als Primer, Deckbeschichtung und Estrich bzw. Aufbaubeton zur Applizierung auf Beton.

## Revendications

1. Composition de résine époxyde durcissable par des amines comprenant :
(A) un constituant résine époxyde comprenant :
8-31 % en poids d'éther de diglycidyle et de bisphénol A,
3-14 % en poids d'éther de diglycidyle et de bisphénol F,
1-5 % en poids d'éther de monoglycidyle,
0,6-5 % en poids d'ester phénylique d'acide alkylsulfonique,
0,16-1 % en poids d'agent mouillant et dispersant,
0,16-1 % en poids d'antimousse et
5-40 % en poids de sulfate de baryum ;
(B) un constituant durcisseur comprenant :
3-18 % en poids de première composition à base d'amines et
2-12 % en poids de seconde composition à base d'amines,
dans laquelle la première composition à base d'amines comprend de la *N,N*'-bis(3-aminométhylbenzyl)-2-hydroxytriméthylènediamine représentée par la formule (I) suivante et de la *m*-xylylènediamine et la seconde composition à base d'amines comprend les produits réactionnels de *m*-xylylènediamine et de styrène représentés par la formule (II) suivante et de la *m-*xylylènediamine, 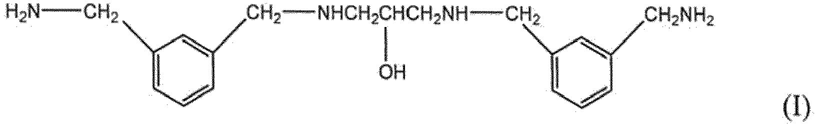 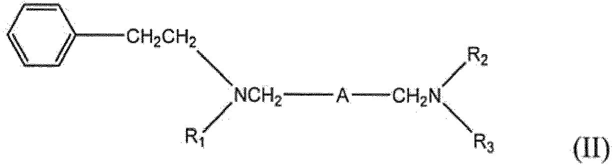 A étant un groupe phénylène et chacun de R₁, R₂ et R₃ représentant indépendamment l'atome d'hydrogène ou un groupe phényléthyle ;
la somme des teneurs en chaque constituant étant de 100 % en poids et chaque pourcentage en poids étant rapporté au poids total de la composition de résine époxyde durcissable par des amines.

2. Composition de résine époxyde durcissable par des amines selon la revendication 1, dans laquelle la teneur en *N,N*'-bis(3-aminométhylbenzyl)-2-hydroxytriméthylènediamine est de 72-76 % en poids de la première composition à base d'amines et la teneur en *m-*xylylènediamine est de 24-28 % en poids de la première composition à base d'amines dans la première composition à base d'amines.

3. Composition de résine époxyde durcissable par des amines selon la revendication 1 ou 2, dans laquelle la teneur en *m*-xylylènediamine est inférieure à 1 % en poids de la seconde composition à base d'amines dans la seconde composition à base d'amines.

4. Composition de résine époxyde durcissable par des amines selon la revendication 1, qui comprend en outre du sable de silice.

5. Composition de résine époxyde durcissable par des amines selon la revendication 1, dans laquelle le constituant durcisseur comprend en outre de l'alcool benzylique.

6. Composition de résine époxyde durcissable par des amines selon la revendication 1, dans laquelle le groupe alkyle dans l'ester phénylique d'acide alkylsulfonique est en C12 à C18.

7. Composition de résine époxyde durcissable par des amines selon la revendication 6, dans laquelle l'ester phénylique d'acide alkylsulfonique est l'ester phénylique de l'acide dodécylsulfonique.

8. Composition de résine époxyde durcissable par des amines selon la revendication 1, dans laquelle l'agent mouillant et dispersant est une solution de copolymère ayant des groupes acides.

9. Utilisation de la composition de résine époxyde durcissable par des amines selon la revendication 1 en tant que couche d'apprêt, couche de finition et cueillies destinées à être appliquées sur du béton.
